# EUROPÄISCHE PATENTSCHRIFT

(11) **EP 2 365 755 B1**
(45) Veröffentlichungstag und Bekanntmachung des Hinweises auf die Patenterteilung: **12.02.2014**
(21) Anmeldenummer: 09748735.9
(22) Anmeldetag: 21.10.2009
(51) Int. Cl.: A21B 3/13

(54) **MODULAR AUFGEBAUTES BEHÄLTNIS FÜR DIE GARENDE ZUBEREITUNG VON SPEISEN**
MODULARLY BUILT CONTAINER FOR COOKED FOOD PREPARATIONS
RÉCIPIENT À STRUCTURE MODULAIRE POUR LA PRÉPARATION D'ALIMENTS À CUIRE

(30) Priorität: 23.10.2008 DE 102008052935; 15.01.2009 US 144945 P
(43) Veröffentlichungstag der Anmeldung: 21.09.2011
(73) Patentinhaber: Ticona GmbH, 65451 Kelsterbach (DE)
(72) Erfinder: HOFMANN, Achim, 64668 Rimbach (DE); JEBSEN, Julia, 28207 Bremen (DE)
(74) Vertreter: Zimmermann & Partner
(86) Internationale Anmeldenummer: PCT/EP2009/063807
(87) Internationale Veröffentlichungsnummer: WO 2010/046397

(56) Entgegenhaltungen:
- EP-A- 0 156 678
- WO-A-2007/110517
- US-A- 541 205
- US-A- 2 015 097
- US-A- 4 452 419
- US-A- 5 062 356

## Beschreibung

Die vorliegende Erfindung betrifft ein modulares, d.h. aus mehreren, lösbar miteinander verbundenen Bauelementen aufgebautes, Behältnis für die garende Zubereitung von Speisen, insbesondere von Backwaren.

Für jede erdenkliche Form von Speisen, insbesondere Backwaren, gibt es individuell ausgestaltete Formen zu deren Zubereitung, insbesondere Backformen, deren jeweilige geometrische Form aber in aller Regel fest vorgegeben ist. Die Lagerung zahlreicher solcher Formen mit unterschiedlichster geometrischer Form führt im Haushalt aber zu Platzproblemen, die im Alltag nicht zu unterschätzen sind.

An teilweise variablen Formen sind Springformen aus Metall bekannt, zu denen es in besonderen Ausführungsformen Einsätze mit unterschiedlichen Geometrien oder Mustern gibt.

US 4 452 419 A beschreibt eine Kuchenform mit horizontalem Boden und peripheren aufrechtstehenden Seitenwänden, in die man einen oder mehrere Kuchenformende modulare Einsätze einbauen kann, während ein Kuchen gebacken wird.

Was aber noch fehlt, wäre eine neue Form, die es erstmals erlaubt, Speisen mit größtmöglicher Formenvielfalt zu gestalten, die gleichzeitig einen nur minimalen Bedarf an Lagerplatz benötigt und die aus nur wenigen einzelnen Bauelementen zusammengesetzt ist.

Es bestand daher die Aufgabe, ein Behältnis für die Zubereitung von Speisen zu entwickeln, das von seiner Geometrie her variabel ist, das aus nur wenigen Einzelteilen besteht und das beim Hersteller mit geringem technischen Aufwand und kostengünstig zu fertigen ist.

Gelöst wird diese Aufgabe durch ein Behältnis der eingangs genannten Art, dessen Kenzeichenmerkmale darin zu sehen sind, dass es eine Grundplatte enthält, die eine Ausdehnung in einer Ebene hat, und Begrenzungselemente, die sich aus der Ebene heraus erstrecken und die lösbar mit der Grundplatte verbunden sind, wie in Anspruch 1 definiert.

Die Grundplatte kann erfindungsgemäß aus einem selbst tragenden Material bestehen, das eine ausreichende mechanische Festigkeit bei gleichzeitig guter Thermostabilität besitzen soll. Eine ausreichende mechanische Festigkeit wird benötigt, um die vorbereiteten Speisen, beispielsweise Backwaren, in noch nicht gegartem Zustand in den Backofen hinein zu befördern und sie dort ortsfest zu fixieren. Die Thermostabilität ist eine Selbstverständlichkeit, weil die Form sich während des Garungsvorgangs im Backofen nicht verändern soll oder gar Gefahr laufen darf, durch den Einfluss der Wärme Beschädigungen zu erleiden.

Die Grundplatte ist daher zweckmäßiger Weise aus Metall oder Keramik gefertigt. Sie kann aber auch aus einem thermostabilen Kunststoff bestehen. Beispiele für solche thermostabilen Kunststoffe sind Duroplaste, wie z.B. Silikone. Es sind aber auch für hohe Temperaturen geeignete thermoplastische Kunststoffe bekannt wie beispielsweise Polyester, Polyamide, Polysulfone, Polyimide oder Polyetherimide. Ein weiteres Beispiel für besonders temperaturbeständige Kunststoffe sind flüssigkristalline vollaromatische Polymere (LCP), deren chemische Zusammensetzung im Stand der Technik bekannt ist und die in einer besonderen Ausführungsform zusätzlich noch mit mineralischen Füllstoffen, mit Glasfasern oder mit Kohlefasern oder mit Kombinationen von diesen verstärkt sein können.

Die Grundplatte ist zusätzlich mit einer Vielzahl von in der Ebene der Grundplatte angeordneter Halte- oder Führungselemente in Form von Rillen oder Nuten als integrale Bestandteile ausgerüstet. Diese Rillen oder Nuten können auf der Rückseite der Grundplatte erhaben ausgebildet sein und wirken sich in dem Fall stabilisieren und versteifend auf die Formbeständigkeit der Grundplatte aus. Zur Steigerung dieses stabilisierenden Effektes können zusätzlich noch Rippen oder Stege auf der Rückseite der Grundplatte vorgesehen werden.

Die Halte- oder Führungselemente selbst bilden in sich geschlossene Kurven, die teilweise ineinander übergehen oder die gegenseitig überlagert sind. Sie dienen dazu, die Begrenzungselemente mit der Grundplatte zu verbinden und sie für die Dauer der Zubereitung der Speisen ortsfest darauf zu fixieren. Die Rillen oder Nuten sind geometrisch so ausgebildet, dass jeweils kongruent dazu ausgestaltete starre Begrenzungselemente darin durch einfaches Einstecken fixiert werden können.

Kommen dagegen statt starrer Begrenzungselemente flexible Begrenzungselemente zum Einsatz, werden diese flexiblen Begrenzungselemente durch die geometrische Ausbildung der Rillen oder Nuten für ihre bestimmungsgemäße Formgebung zunächst lenkend geführt und dann durch Einstecken ortsfest fixiert.

Als Begrenzungselemente werden erfindungsgemäß flexible Begrenzungselemente zum Einsatz kommen. Im Fall von starren Begrenzungselementen bilden diese kongruent zu den Haltelementen auf der Grundplatte ausgebildete in sich geschlossene, aber nach oben und unten offene Rahmen, die ohne weiteres in die in der Grundplatte vorhandenen Rillen oder Nuten eingesteckt werden können. Solche Rahmen können kreisförmig oder mehreckig oder auch herzförmig oder oval gestaltet sein und bilden dann zusammen mit der Grundplatte ein nach oben offenes Behältnis, das zur Aufnahme der vorbereiteten Speisen geeignet ist und auch genau dazu dient. Die Begrenzungselemente können zu Zecken der besseren Stabilisierung zusätzlich versteifende Elemente wie Stege oder Rippen aufweisen.

Im Fall von starren Begrenzungselementen können diese aus Metall oder aus einem der vorher genannten thermostabilen Kunststoffe gefertigt sein. Vorzugsweise sind sie aus thermostabilem Kunststoff gefertigt, weil dann die Fixierung auf der Grundplatte und später die Entformbarkeit zur Freilegung der Speisen nach der Zubereitung durch die bessere Beweglichkeit des Kunststoffs gegenüber Metall einfacher ist.

Der Einsatz von einem oder von mehreren flexiblen Begrenzungselementen hat gegenüber starren Begrenzungselementen den Vorteil einer noch größeren Flexibilität der Formenvielfalt bei gleichzeitig noch geringerem Bedarf an Lagerplatz im Haushalt oder im Backbetrieb.

Im Sonderfall eines Ringes als flexiblem Begrenzungselement lässt es sich sogar mit nur zwei Teilen, der Grundplatte und dem Ring, auskommen, wenn nämlich die Umfänge der einzelnen Form gebenden Rillen oder Nuten alle gleich sind und zugleich alle dem Umfang des Begrenzungsringes entsprechen. In dem Fall lassen sich rein theoretisch bei geringstmöglichem Stauraumbedarf mit nur zwei Einzelteilen nahezu alle erdenklichen Formgeometrien herstellen.

Flexible Begrenzungselemente bestehen dabei vorzugsweise aus vernetztem Silikonpolymer, das eine ausreichende Thermostabilität besitzt. Flexible Begrenzungselemente müssen im Gegensatz zu starren Begrenzungselementen keine in sich geschlossene Kurve bilden, sie lassen sich aber zu einer geschlossenen Kurve zusammenstecken, indem sie mit seitlichen Verbindungselementen in der Form von Steckverbindungen ausgerüstet sind. Auch können reißverschlussartige seitliche Verbindungen der flexiblen Begrenzungselemente vorgesehen sein, die im Rahmen der Figurenbeschreibung noch näher erläutert werden sollen.

Mit flexiblen Begrenzungselementen lässt sich insofern eine größere Formenvielfalt ermöglichen, als nicht unbedingt immer nur ein einziges Begrenzungselement zu einer geschlossenen Kurve mit sich selbst seitlich verbunden werden muss, sondern es werden auch mehrere flexible Begrenzungselemente miteinander zu geometrischen Figuren mit einem Umfang von jeweils einem Vielfachen der seitlichen Ausdehnung eines Begrenzungselementes zusammengefügt. Die Steckverbindungen wirken dabei gleichzeitig versteifend auf die Konstruktion der so zusammen mit der Grundplatte hergestellten Behältnisse.

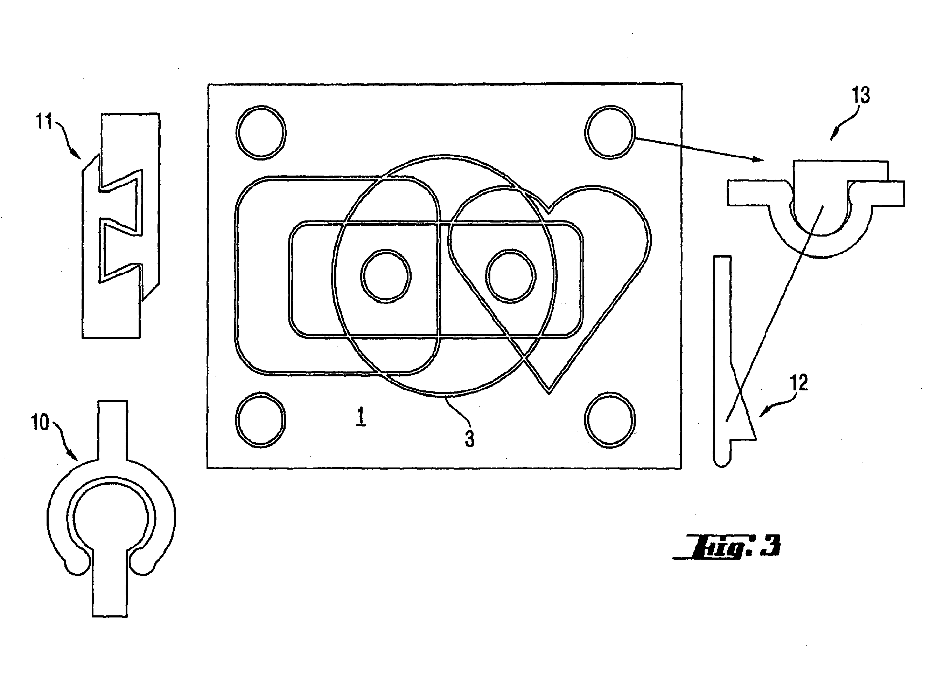

Die erfindungsgemäße Grundplatte aus Kunststoff wird vorzugsweise durch herkömmliche Techniken wie Spritzguss, Thermoformen, Heißpressen, Spritzprägen, Niederdruckspritzguss oder Blasformen hergestellt. Die Rillen oder Nuten in der Grundplatte werden bei der Fertigung nach diesen Techniken gleich mit ausgebildet, sie können aber auch in einem zweiten Fertigungsschritt nachträglich angebracht werden. Zweckmäßiger Weise bilden sich die formgebenden Rillen oder Nuten wie in Figur 3, Bezugsziffer 13 dargestellt, auf der Rückseite der Grundplatte als Erhebungen ab. Zwischen mehreren dieser Erhebungen auf der Rückseite der Grundplatte können zur besseren Versteifung Rippen oder Stege angeordnet werden, die die Grundplatte besser gegen Verformung stabilisieren.

Auch die Begrenzungselemente aus Kunststoff können nach den gleichen Techniken wie Spritzguss, Thermoformen, Heißpressen, Spritzprägen, Niederdruckspritzguss oder Blasformen hergestellt werden, die dem Fachmann prinzipiell bekannt sind.

Die Begrenzungselemente bilden an der Stelle, an der sie mit der Grundplatte befestigt sind, einen Winkel von 90°, es können aber auch andere Winkel vorgesehen sein, wenn in besonderer Weise abgeschrägte Formen, beispielsweise für Backwaren, angestrebt sind.

Nachfolgend soll die Erfindung beispielhaft anhand von Zeichnungen für den Fachmann noch deutlicher dargestellt werden.
**Figur 1** zeigt eine perspektivische Darstellung einer Grundplatte mit einigen zugehörenden Begrenzungselementen in starrer Ausführungsform, seitlich von oben gesehen.
**Figur 2** zeigt eine perspektivische Darstellung einer erfindungsgemäßen Grundplatte, in die einige Begrenzungselemente schon eingesetzt sind, seitlich von oben gesehen.
**Figur 3** zeigt schematisch eine andere erfindungsgemäße Grundplatte mit anderen Halteelementen sowie Verbindungsbeispiele von flexiblen Begrenzungselementen miteinander und mit der Grundplatte.
**Figur 4** zeigt eine weitere perspektivische Darstellung einer erfindungsgemäßen Grundplatte, die vorgegebene Halteelemente mit anderer geometrischer Ausbildung aufweist, seitlich von oben gesehen.
**Figur 5** zeigt eine Grundplatte nach Figur 4 von der Rückseite gesehen.

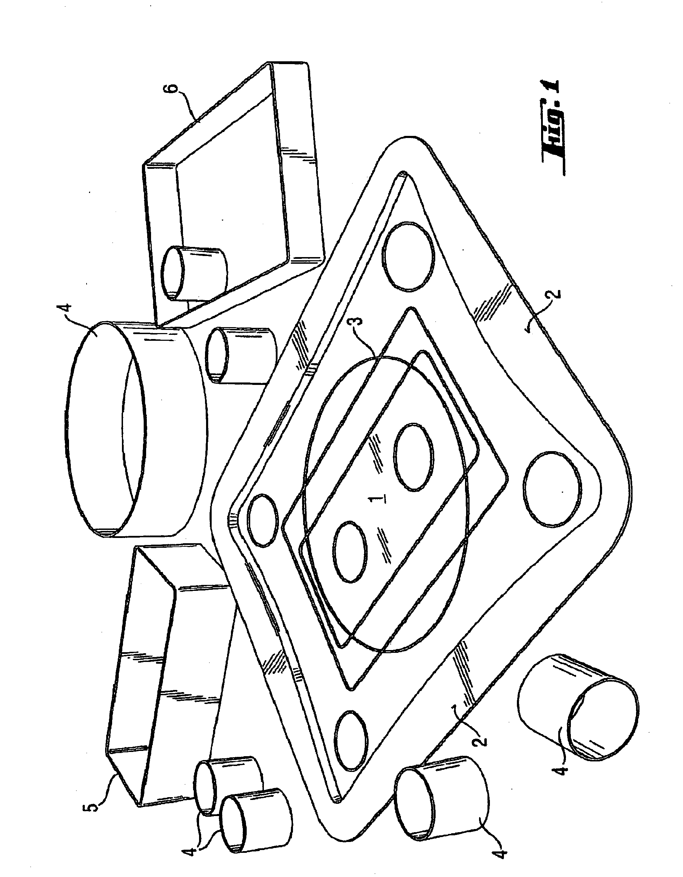

In Figur 1 ist durch Bezugszeichen die Grundplatte 1 bezeichnet, die sich im Wesentlichen in einer Ebene erstreckt. Seitlich weist die Grundplatte 1 aber Haltegriffe 2 auf, die aus der Ebene herausragen und durch ihre Anwesenheit die Handhabbarkeit der Konstruktion verbessern helfen. Zusätzlich sind auf der Grundplatte 1 Halteelemente 3 dargestellt, die als Rillen in Form von in sich geschlossenen Kurven auf der Oberseite der Grundplatte 1 verlaufen. Außerdem sind in Figur 1 noch diverse Begrenzungselemente 4, 5 und 6 dargestellt, die teilweise runde (4), teilweise viereckige (5 u. 6) Geometrie aufweisen.

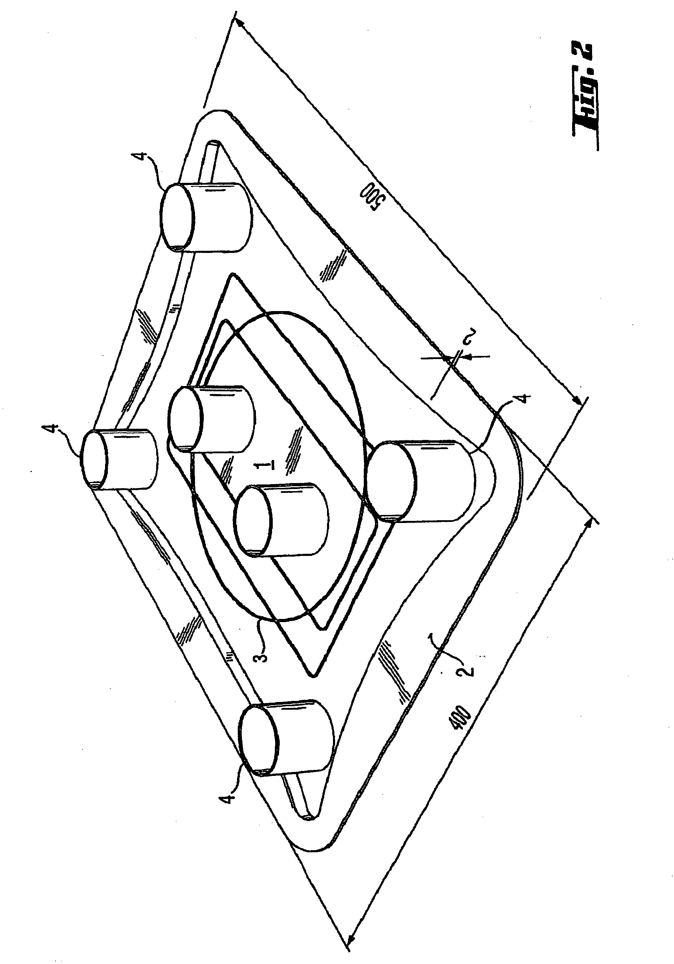

In Figur 2 haben gleiche Bezugszeichen gleiche Bedeutung wie in Figur 1. Insbesondere ist auch dort die Grundplatte 1 dargestellt sowie einige senkrecht darauf angebrachte, runde Begrenzungselemente 4 für Muffins. Die Grundplatte 1 weist auch in dieser Darstellung seitliche Haltegriffe 2 auf sowie einige andere Halteelemente 3 mit anderer Geometrie. In Figur 2 ist zusätzlich dargestellt, dass die Länge einer beispielhaften erfindungsgemäßen Grundplatte 1 fünfhundert (500) mm betragen kann, während ihre Breite etwa vierhundert (400) mm beträgt. Die Dicke der Grundplatte 1 kann im Bereich von 1 bis 5 mm variieren, in der Darstellung der Figur 2 liegt sie bei 2 mm.

In Figur 3 ist eine weitere Grundplatte 1 zu sehen, die auf ihrer Oberseite Halteelemente 3 mit anderer Geometrie aufweist. seitlich dargestellt sind zwei Möglichkeiten von seitlichen Steckverbindungen 10 und 11 von flexiblen Begrenzungselementen aus vernetztem Silikonpolymer. Besonders die Steckverbindung 11 zeigt trapezförmig ausgebildete und ineinander greifende Halterungen, die in der Form eines Reißverschlusses an einem Ende ineinander gesteckt und dann mit den Fingern durch einfaches Entlangstreichen miteinander befestigt werden können. Die Bezugszeichen 12 und 13 weisen auf Möglichkeiten der Befestigung der Begrenzungselemente 4, 5, 6 mit der Grundplatte 1 sowie deren mögliche seitliche Versteifung 12 hin.

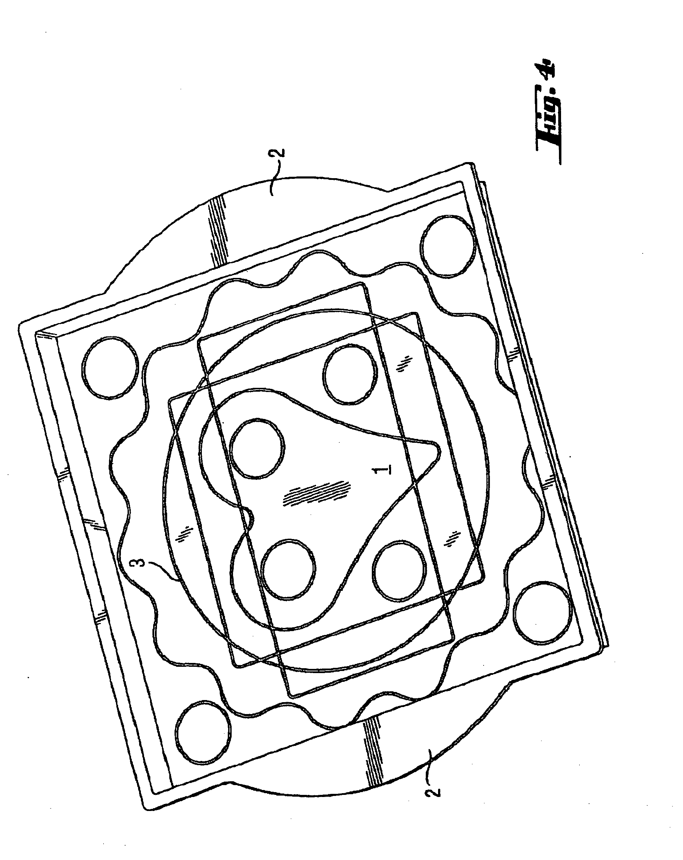

Die Figur 4 zeigt noch eine andere Grundplatte 1 mit seitlichen Haltegriffen 2 und anders verlaufenden Halteelementen 3.

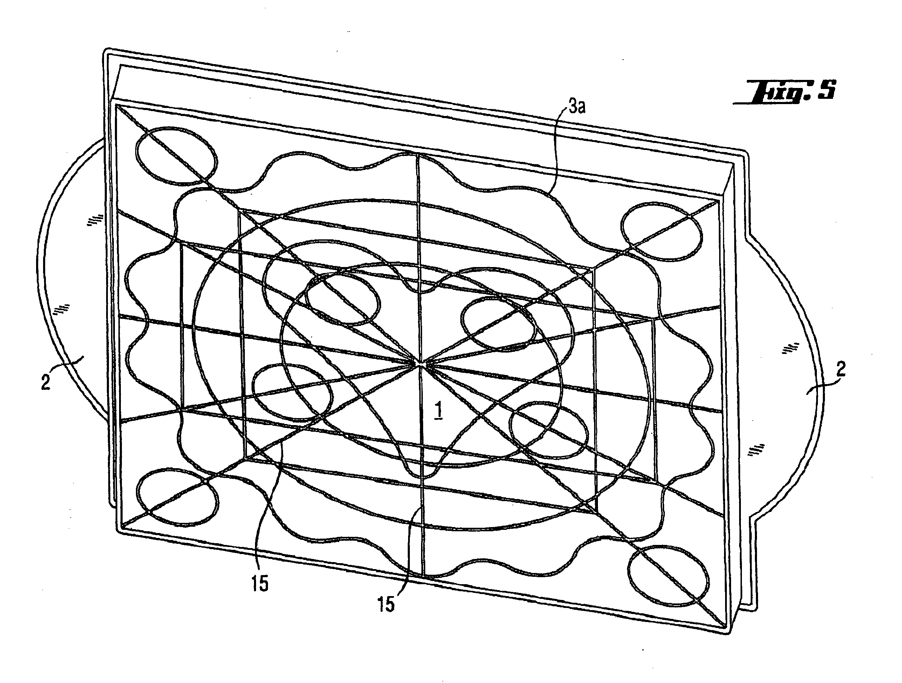

Figur 5 zeigt die rückwärtige Ansicht der Grundplatte 1 nach Figur 4. Gleiche Bezugszeichen bezeichnen dabei gleiche Elemente. Die vorderseitigen Rillen und Nuten in der Grundplatte 1 treten auf der Rückseite als Erhebungen 3a hervor. Außerdem ist eine Stabilisierung der Geometrie der Grundplatte 1 durch zusätzliche diagonal oder transversal verlaufende Rippen und Stege 15 dargestellt.

## Patentansprüche

1. Modulares Behältnis für die garende Zubereitung von Speisen, enthaltend eine Grundplatte ( 1 ), die eine Ausdehnung in einer Ebene hat, und ein oder mehrere Begrenzungselemente (4 , 5 , 6), die sich aus der Ebene heraus erstrecken und die lösbar mit der Grundplatte (1) verbunden sind, **dadurch gekennzeichnet, dass** die Begrenzungselemente ( 4 , 5 , 6 ) flexibel sind und die Grundplatte ( 1 ) zusätzlich mit einer Vielzahl von in der Ebene der Grundplatte angeordneter Halte- oder Führungselemente ( 3 ) in Form von Rillen oder Nuten als integrale Bestandteile ausgerüstet ist, und dass die Halte- oder Führungselemente ( 3 ) in sich geschlossene Kurven bilden, die teilweise ineinander übergehen oder die gegenseitig überlagert sind,
wobei die flexiblen Begrenzungselemente (4, 5, 6) miteinander zu geometrischen Figuren mit einem Umfang von jeweils einem Vielfachen der seitlichen Ausdehnung eines Begrenzungselements zusammengefügt werden.

2. Modulares Behältnis nach Anspruch 1, **dadurch gekennzeichnet, dass** die Grundplatte ( 1) aus einem selbst tragenden Material besteht, das eine ausreichende mechanische Festigkeit bei gleichzeitig guter Thermostabilität besitzt.

3. Modulares Behältnis nach Anspruch 1 oder 2, **dadurch gekennzeichnet, dass** die Grundplatte ( 1) aus Metall, aus Keramik oder aus thermostabilem Kunststoff, wie duroplastischem Silikon oder aus thermoplastischem Kunststoff wie Polyester, Polyamid, Polysulfon, Polyimid oder Polyetherimid, vorzugsweise aus besonders thermostabilem, flüssigkristallinem, vollaromatischem Polymer, gefertigt ist.

4. Modulares Behältnis nach einem der Ansprüche 1 bis 3, **dadurch gekennzeichnet, dass** die flexiblen Begrenzungselemente ( 4, 5, 6) kreisförmig oder mehreckig oder herzförmig oder gewellt oder gewölbt oder oval gestaltet sind.

5. Modulares Behältnis nach einem der Ansprüche 1 bis 4, **dadurch gekennzeichnet, dass** flexible Begrenzungselemente vorzugsweise aus vernetztem Silikonpolymer gefertigt sind, das eine ausreichende Thermostabilität besitzt, dass sie sich zu einer geschlossenen Kurve zusammenstecken lassen und dass sie mit seitlichen Verbindungselementen (10 , 11) in der Form von Steckverbindungen ausgerüstet sind.

6. Modulares Behältnis nach einem der Ansprüche 1 bis 5, **dadurch gekennzeichnet, dass** auf der Rückseite der Grundplatte ( 1 ) versteifende oder stabilisierende Strukturen in Form von Rippen und Stegen (15) angebracht sind.

7. Verfahren zum Herstellen eines modularen Behältnisses für die garende Zubereitung von Speisen, insbesondere Backwaren, gemäss einem oder mehreren der Ansprüche 1 bis 6 durch bei der Kunststoffverarbeitung übliche Techniken wie Spritzguss, Thermoformen, Heisspressen, Spritzprägen, Niederdruckspritzguss oder Blasformen, wobei die Rillen oder Nuten ( 3 ) sowie die Rippen und Stege (15) in der Grundplatte (1) bei der Fertigung nach diesen Techniken in einem Fertigungsschritt mit ausgebildet werden.

8. Verfahren zum Herstellen eines modularen Behältnisses für die Zubereitung von Backwaren gemäss einem oder mehreren der Ansprüche 1 bis 6, **dadurch gekennzeichnet dass** die Grundplatte ( 1 ) zuerst durch Spritzguss, Thermoformen oder Blasformen hergestellt wird und dass die Rillen oder Nuten ( 3 ) sowie die Rippen und Stege ( 15 ) in einem zweiten Fertigungsschritt auf der Oberseite, bzw. der Unterseite der Grundplatte ( 1) angebracht werden.

## Claims

1. A modular container for preparing foods to be cooked, comprising a base plate (1) having an extension in a plane, and one or more bordering elements (4, 5, 6) which extend out from the plane, and are connected removably to the base plate (1), **characterized in that** the bordering elements (4, 5, 6) are flexible and the base plate (1) is additionally equipped with a plurality of holding or guiding elements (3), arranged in the plane of the base plate, in form of notches or grooves as integral parts, and **in that** the holding or guiding elements (3) form closed curves which partially merge into each other or which are superimposed on each other, wherein the flexible bordering elements (4, 5, 6) are joined to each other to geometrical figures with a circumference of a multiple of the lateral dimension of a bordering element.

2. A modular container according to claim 1, **characterized in that** the base plate (1) consists of a self-supporting material which has a sufficient mechanical strength and good thermal stability.

3. A modular container according to claims 1 or 2, **characterized in that** the base plate (1) is made of metal, ceramic or thermostable plastic material, such as thermoset silicon or thermoplastic plastic, such as polyester, polyamide, polysulfone, polyimide, or polyetherimide, particularly of especially thermally stable liquid crystalline, wholly aromatic polymer.

4. A modular container according to any one of claims 1 to 3, **characterized in that** the flexible bordering elements (4, 5, 6) are circular or rectangular or heart shaped or curved or corrugated or oval in shape.

5. A modular container according to any one of claims 1 to 4, **characterized in that** flexible bordering elements are preferably made of crosslinked silicone polymer that has a sufficient thermal stability, and that they can be plugged together to form a closed curve, and that they are equipped with lateral connecting elements (10, 11) in form of plug-ins.

6. A modular container according to any one of claims 1 to 5, **characterized in that** on the back of the base plate (1) stabilizing or reinforcing structures in the form of ribs and webs (15) are mounted.

7. A method for manufacturing a modular container for preparing foods to be cooked, in particular bakery products, according to one or more of claims 1 to 6, with the help of conventional techniques for plastic processing such as injection molding, thermoforming, hot-pressing, injection-compression molding, low pressure injection molding or blow molding, wherein the notches or grooves and the ribs and webs (15) are formed in a production step in the base plate (1) during manufacture of these techniques.

8. A method for manufacturing a modular container for the preparation of bakery products according to one or more of claims 1 to 6, **characterized in that** the base plate (1) is first made by injection molding, thermoforming or blow molding, and that the notches or grooves (3) and the ribs and webs (15) are attached in a second manufacturing step on the top or the bottom of the base plate (1).

## Revendications

1. Récipient modulaire pour la préparation par cuisson d'aliments, comprenant une plaque de base (1) qui a une extension dans un plan, et un ou plusieurs éléments de délimitation (4, 5, 6) qui s'étendent en sortant du plan et qui sont liés de manière amovible à la plaque de base (1), **caractérisé en ce que** les éléments de délimitation (4, 5, 6) sont flexibles et la plaque de base (1) est en outre munie d'une pluralité d'éléments de maintien ou de guidage (3) disposés dans le plan de la plaque de base, sous forme de sillons ou de rainures, constituant des parties intégrantes, et **en ce que** les éléments de maintien ou de guidage (3) forment des courbes fermées sur elles-mêmes qui se confondent en partie ou se superposent les unes aux autres,
dans lequel les éléments de délimitation flexibles (4, 5, 6) sont assemblés les uns aux autres en figures géométriques d'une étendue de respectivement un multiple de l'extension latérale d'un élément de délimitation.

2. Récipient modulaire selon la revendication 1, **caractérisé en ce que** la plaque de base (1) est composée d'un matériau autoportant qui possède une résistance mécanique suffisante tout en présentant une bonne thermostabilité.

3. Récipient modulaire selon la revendication 1 ou 2, **caractérisé en ce que** la plaque de base (1) est faite de métal, de céramique ou de matière synthétique thermostable comme du silicone thermodurcissable ou de la matière synthétique thermoplastique comme du polyester, du polyamide, du polysulfone, du polyimide ou du polyétherimide, de préférence de polymère particulièrement thermostable, cristallin liquide, intégralement aromatique.

4. Récipient modulaire selon l'une des revendications 1 à 3, **caractérisé en ce que** les éléments de délimitation flexibles (4, 5, 6) sont conçus en forme circulaire ou polygonale ou en forme de coeur ou ondulée ou bombée ou ovale.

5. Récipient modulaire selon l'une des revendications 1 à 4, **caractérisé en ce que** des éléments de délimitation flexibles sont faits de préférence de polymère de silicone réticulé possédant une thermostabilité suffisante, **en ce qu'**ils peuvent être enfichés en une courbe fermée sur elle-même et **en ce qu'**ils sont munis d'éléments de connexion latéraux (10, 11) en forme de connecteurs enfichables.

6. Récipient modulaire selon l'une des revendications 1 à 5, **caractérisé en ce que** des structures de renforcement ou de stabilisation en forme de nervures et de pattes (15) sont disposées sur la face arrière de la plaque de base (1).

7. Procédé de fabrication d'un récipient modulaire pour la préparation par cuisson d'aliments, en particulier de produits de boulangerie, selon l'une ou plusieurs des revendications 1 à 6, par des techniques habituelles dans la transformation de matières synthétiques comme le moulage par injection, le thermoformage, la compression à chaud, le matriçage par injection, le moulage par injection à basse pression ou le formage par soufflage, les sillons ou rainures (3) ainsi que les nervures et pattes (15) étant aussi formées en une étape de fabrication dans la plaque de base (1) lors de la fabrication selon ces techniques.

8. Procédé de fabrication d'un récipient modulaire pour la préparation de produits de boulangerie selon l'une ou plusieurs des revendications 1 à 6, **caractérisé en ce que** la plaque de base (1) est d'abord fabriquée par moulage par injection, thermoformage ou formage par soufflage et **en ce que** les sillons ou rainures (3) ainsi que les nervures et pattes (15) sont apposées à une deuxième étape de fabrication sur la face supérieure, ou sur la face inférieure, de la plaque de base (1).
